(19) Europäisches Patentamt
European Patent Office
Office européen des brevets

(11) EP 3 242 927 B1

(12) # EUROPEAN PATENT SPECIFICATION

(45) Date of publication and mention of the grant of the patent:
**10.10.2018 Bulletin 2018/41**

(21) Application number: **15808649.6**

(22) Date of filing: **15.12.2015**

(51) Int Cl.:
***C11D 3/40*** *(2006.01)* ***C09B 19/00*** *(2006.01)*
***C11D 11/00*** *(2006.01)*

(86) International application number:
**PCT/EP2015/079706**

(87) International publication number:
**WO 2016/110378 (14.07.2016 Gazette 2016/28)**

(54) **LAUNDRY TREATMENT COMPOSITION COMPRISING A DYE**

FARBSTOFF ENTHALTENDES WÄSCHEBEHANDLUNGSMITTEL

COMPOSITION DE TRAITEMENT DU LINGE COMPRENANT UN COLORANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.01.2015 EP 15150558**

(43) Date of publication of application:
**15.11.2017 Bulletin 2017/46**

(73) Proprietors:
- **Unilever PLC, a company registered in England and Wales under company no. 41424**
  **Greater London EC4Y 0DY (GB)**
  Designated Contracting States:
  **CY GB IE MT**
- **Unilever N.V.**
  **3013 AL Rotterdam (NL)**
  Designated Contracting States:
  **AL AT BE BG CH CZ DE DK EE ES FI FR GR HR HU IS IT LI LT LU LV MC MK NL NO PL PT RO RS SE SI SK SM TR**

(72) Inventors:
- **BATCHELOR, Stephen, Norman**
  **Wirral**
  **Merseyside CH63 3JW (GB)**
- **BURNHAM, Neil, Stephen**
  **Wirral**
  **Merseyside CH63 3JW (GB)**

(74) Representative: **Brooijmans, Rob Josephina Wilhelmus**
**Unilever Patent Group**
**Olivier van Noortlaan 120**
**3133 AT Vlaardingen (NL)**

(56) References cited:
**WO-A1-2005/003277 WO-A1-2005/042504**
**WO-A1-2008/017570 WO-A1-2012/172038**
**CA-A1- 1 257 253 US-A1- 2006 230 547**

- **ANDREI LOAS ET AL: "Addition of a Second Binding Site Increases the Dynamic Range but Alters the Cellular Localization of a Red Fluorescent Probe for Mobile Zinc", INORGANIC CHEMISTRY, vol. 53, no. 13, 7 July 2014 (2014-07-07), pages 6491-6493, XP055197653, ISSN: 0020-1669, DOI: 10.1021/ic500732z cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 242 927 B1

## Description

### Field of Invention

The present invention concerns a blue-violet photobleach in laundry compositions.

### Background of the Invention

Shading dyes are blue or violet dyes that deposit to fabrics from the wash to provide a blue or violet tint, which enhances fabric whiteness. Shading dyes are discussed in WO 2012/172038 (Unilever).

WO2005/003277 (Unilever) discloses xanthenes dyes as effective laundry photobleaches. The compounds are red in colour and to obtain a blue-violet colour must be mixed with a green-blue dye. Xanthene dyes contain an aromatic system of 3 fused 6 membered rings, and as such are much simpler than the green metallated phthalocyanins laundry photobleaches discussed in WO2005/014769 (Ciba).

A Loas et al in Inorganic Chemistry 53, 6491-6493, discloses phenoxazine dyes as a probe.

WO 2005/042504 discloses some phenoxazine compounds.

US 2006/230547 discloses some phenoxazine compounds.

CA 1257 253 discloses some phenoxazine compounds.

### Summary of the Invention

There is a need for an effective blue-violet photobleach for use in laundry detergents based on a simple 3 fused ring structure that is provided herein.

In one aspect the present invention provides a laundry treatment composition comprising: from 2 to 70 wt% of a surfactant, preferably from 5 to 30 wt%, and from 0.0001 to 0.1 wt% of a blue or violet phenoxazine dye of the following formula and N-oxide thereof:

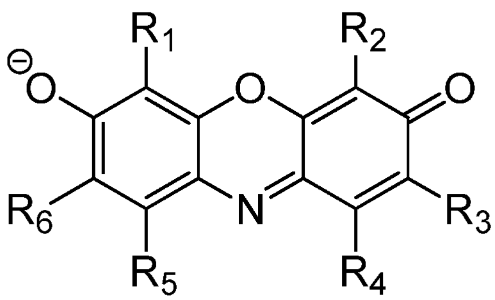

wherein $R_1$ to $R_6$ are independently selected from uncharged substituents, each respective uncharged substituents $R_1$ to $R_6$ having a molecular weight in the range 1 to 150.

In another aspect the present invention provides a domestic method of treating a textile, the method comprising the step of: treating a textile with an aqueous solution of 0.5 to 20 g/L, more preferably 1 to 10g/L, of the laundry detergent composition as defined herein.

### Detailed Description of the Invention

The dyes used in the present invention are blue or violet. In this regard the dye gives a blue or violet colour to a white cloth with a hue angle of 240 to 330, more preferably 260 to 320, most preferably 270 to 300. The white cloth used is bleached non-mercerised woven cotton sheeting.

The counterion of the blue or violet phenoxazine dye may be an alkali metal, alkaline earth metal or a quaternary amine-most preferably the counterion is the sodium salt.

Preferably the $R_1$ to $R_6$ are independently selected from: hydrogen; methyl; ethyl; methoxy; ethoxy; fluorine; chlorine; bromine; and, iodine.

Preferably one of the $R_1$ to $R_6$ are independently selected from: fluorine; chlorine; bromine; iodine and the remainder of $R_1$ to $R_6$ are hydrogen.

Preferably two of the $R_1$ to $R_6$ are independently selected from: fluorine; chlorine; bromine; iodine and the remainder are hydrogen.

Preferably the halogen is selected from: chlorine; and, iodine. The preferred the halogen is chlorine.

Phenoxazine dyes may be simply synthesised via the acid-catalyzed condensation between resorcinol and 4-nitrosoresorcinol:

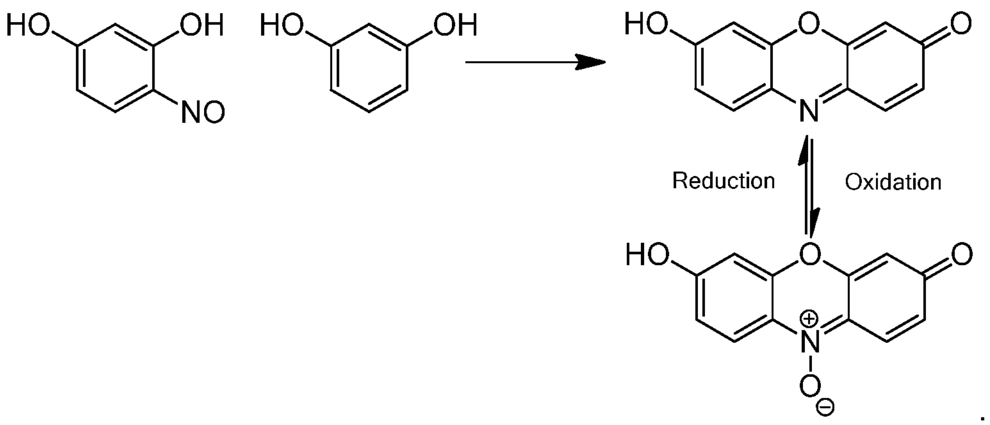


The dye may be readily oxidised to the N-oxide form, in a reversible reaction.

The dye typically displays a $pK_a$ of approximately 6 and becomes negatively charged above this. Preferably the pH of the formulation in the wash liquor at 2g/L (demin water) is greater than the $pK_a$, more preferably greater than 7, most preferably greater than 10.

## Surfactant

The laundry composition comprises from 2 to 70 wt percent of a surfactant, most preferably 10 to 30 wt %. In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981. Preferably the surfactants used are saturated.

Suitable nonionic detergent compounds which may be used include, in particular, the reaction products of compounds having a hydrophobic group and a reactive hydrogen atom, for example, aliphatic alcohols, acids, amides with alkylene oxides, especially ethylene oxide either alone or with propylene oxide. Specific nonionic detergent compounds are the condensation products of aliphatic $C_8$ to $C_{18}$ primary or secondary linear or branched alcohols with ethylene oxide, generally 5 to 40 EO, preferably 7EO to 9EO.

Suitable anionic detergent compounds which may be used are usually water-soluble alkali metal salts of organic sulphates and sulphonates having alkyl radicals containing from about 8 to about 22 carbon atoms, the term alkyl being used to include the alkyl portion of higher acyl radicals. Examples of suitable synthetic anionic detergent compounds are sodium and potassium alkyl sulphates, especially those obtained by sulphating higher $C_8$ to $C_{18}$ alcohols, produced for example from tallow or coconut oil, sodium and potassium alkyl $C_9$ to $C_{20}$ benzene sulphonates, particularly sodium linear secondary alkyl $C_{10}$ to $C_{15}$ benzene sulphonates; and sodium alkyl glyceryl ether sulphates, especially those ethers of the higher alcohols derived from tallow or coconut oil and synthetic alcohols derived from petroleum. The preferred anionic detergent compounds are sodium $C_{11}$ to $C_{15}$ alkyl benzene sulphonates and sodium $C_{12}$ to $C_{18}$ alkyl sulphates. Also applicable are surfactants such as those described in EP-A-328 177 (Unilever), which show resistance to salting-out, the alkyl polyglycoside surfactants described in EP-A-070 074, and alkyl monoglycosides.

Preferred surfactant systems are mixtures of anionic with nonionic detergent active materials, in particular the groups and examples of anionic and nonionic surfactants pointed out in EP-A-346 995 (Unilever). Especially preferred is surfactant system that is a mixture of an alkali metal salt of a $C_{16}$ to $C_{18}$ primary alcohol sulphate together with a $C_{12}$ to $C_{15}$ primary alcohol 3 to 7 EO ethoxylate.

The nonionic detergent is preferably present in amounts less than 50wt%, most preferably less than 20wt% of the surfactant system. Anionic surfactants can be present for example in amounts in the range from about 50% to 100 wt % of the surfactant system.

In another aspect which is also preferred the surfactant may be a cationic such that the formulation is a fabric conditioner.

## Cationic Compound

When the present invention is used as a fabric conditioner it needs to contain a cationic compound.

Most preferred are quaternary ammonium compounds.

It is advantageous if the quaternary ammonium compound is a quaternary ammonium compound having at least one $C_{12}$ to $C_{22}$ alkyl chain.

It is preferred if the quaternary ammonium compound has the following formula:

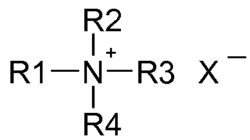

in which $R_1$ is a $C_{12}$ to $C_{22}$ alkyl or alkenyl chain; $R^2$, $R^3$ and $R^4$ are independently selected from $C_1$ to $C_4$ alkyl chains and $X^-$ is a compatible anion. A preferred compound of this type is the quaternary ammonium compound cetyl trimethyl quaternary ammonium bromide.

A second class of materials for use with the present invention are the quaternary ammonium of the above structure in which $R^1$ and $R^2$ are independently selected from $C_{12}$ to $C_{22}$ alkyl or alkenyl chain; $R^3$ and $R^4$ are independently selected from $C_1$ to $C_4$ alkyl chains and $X^-$ is a compatible anion.

A detergent composition according to claim 1 in which the ratio of (ii) cationic material to (iv) anionic surfactant is at least 2:1.

Other suitable quaternary ammonium compounds are disclosed in EP 0 239 910 (Procter and Gamble).

It is preferred if the ratio of cationic to nonionic surfactant is from 1:100 to 50:50, more preferably 1:50 to 20:50.

The cationic compound may be present from 1.5 wt % to 50 wt % of the total weight of the composition. Preferably the cationic compound may be present from 2 wt % to 25 wt %, a more preferred composition range is from 5 wt % to 20 wt %.

The softening material is preferably present in an amount of from 2 to 60% by weight of the total composition, more preferably from 2 to 40%, most preferably from 3 to 30% by weight.

The composition optionally comprises a silicone.

## Builders or Complexing Agents

Builder materials may be selected from 1) calcium sequestrant materials, 2) precipitating materials, 3) calcium ion-exchange materials and 4) mixtures thereof.

Examples of calcium sequestrant builder materials include alkali metal polyphosphates, such as sodium tripolyphosphate and organic sequestrants, such as ethylene diamine tetra-acetic acid.

Examples of precipitating builder materials include sodium orthophosphate and sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The composition may also contain 0-65 % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilising agents by virtue of their ability to complex metal ions.

Zeolite and carbonate (carbonate (including bicarbonate and sesquicarbonate) are preferred builders.

The composition may contain as builder a crystalline aluminosilicate, preferably an alkali metal aluminosilicate, more preferably a sodium aluminosilicate. This is typically present at a level of less than 15%w. Aluminosilicates are materials having the general formula:

$$0.8\text{-}1.5\ M_2O.\ Al_2O_3.\ 0.8\text{-}6\ SiO_2$$

where M is a monovalent cation, preferably sodium. These materials contain some bound water and are required to have a calcium ion exchange capacity of at least 50 mg CaO/g. The preferred sodium aluminosilicates contain 1.5-3.5 $SiO_2$ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates,

such as soluble silicates, metasilicates, layered silicates (e.g. SKS-6 from Hoechst).

Preferably the laundry detergent formulation is a non-phosphate built laundry detergent formulation, i.e., contains less than 1 wt% of phosphate. Preferably the laundry detergent formulation is carbonate built.

## Fluorescent Agent

The composition preferably comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the composition is generally from 0.005 to 2 wt %, more preferably 0.01 to 0.1 wt %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-naphthol[1,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

It is preferred that the aqueous solution used in the method has a fluorescer present. When a fluorescer is present in the aqueous solution used in the method it is preferably in the range from 0.0001 g/l to 0.1 g/l, preferably 0.001 to 0.02 g/l.

## Perfume

Preferably the composition comprises a perfume. The perfume is preferably in the range from 0.001 to 3 wt %, most preferably 0.1 to 1 wt %. Many suitable examples of perfumes are provided in the CTFA (Cosmetic, Toiletry and Fragrance Association) 1992 International Buyers Guide, published by CFTA Publications and

OPD 1993 Chemicals Buyers Directory 80th Annual Edition, published by Schnell Publishing Co.

It is commonplace for a plurality of perfume components to be present in a formulation.

In the compositions of the present invention it is envisaged that there will be four or more, preferably five or more, more preferably six or more or even seven or more different perfume components.

In perfume mixtures preferably 15 to 25 wt% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol.

Perfume and top note may be used to cue the whiteness benefit of the invention.

It is preferred that the laundry treatment composition does not contain a peroxygen bleach, e.g., sodium percarbonate, sodium perborate, and peracid.

## Polymers

The composition may comprise one or more further polymers. Examples are carboxymethylcellulose, poly (ethylene glycol), poly(vinyl alcohol), polycarboxylates such as polyacrylates, maleic/acrylic acid copolymers and lauryl methacrylate/acrylic acid copolymers.

Polymers present to prevent dye deposition, for example poly(vinylpyrrolidone), poly(vinylpyridine-N-oxide), and poly(vinylimidazole), are preferably absent from the formulation.

## Enzymes

One or more enzymes are preferred present in a laundry composition of the invention and when practicing a method of the invention.

Preferably the level of each enzyme in the laundry composition of the invention is from 0.0001 wt% to 0.1 wt% protein.

Especially contemplated enzymes include proteases, alpha-amylases, cellulases, lipases, peroxidases/oxidases, pectate lyases, and mannanases, or mixtures thereof.

Suitable lipases include those of bacterial or fungal origin. Chemically modified or protein engineered mutants are included. Examples of useful lipases include lipases from *Humicola* (synonym *Thermomyces),* e.g. from *H. lanuginosa (T. lanuginosus)* as described in EP 258 068 and EP 305 216 or from *H. insolens* as described in WO 96/13580, a *Pseudomonas* lipase, e.g. from *P. alcaligenes* or *P. pseudoalcaligenes* (EP 218 272), *P. cepacia* (EP 331 376), *P. stutzeri* (GB 1,372,034), *P. fluorescens, Pseudomonas* sp. strain SD 705 (WO 95/06720 and WO 96/27002), *P. wisconsinensis* (WO 96/12012), a *Bacillus* lipase, e.g. from *B. subtilis* (Dartois et al. (1993), Biochemica et Biophysica Acta, 1131, 253-360), *B. stearothermophilus* (JP 64/744992) or *B. pumilus* (WO 91/16422).

Other examples are lipase variants such as those described in WO 92/05249, WO 94/01541, EP 407 225, EP 260 105, WO 95/35381, WO 96/00292, WO 95/30744, WO 94/25578, WO 95/14783, WO 95/22615, WO 97/04079 and WO 97/07202, WO 00/60063.

Preferred commercially available lipase enzymes include Lipolase™ and Lipolase Ultra™, Lipex™ and lipoclean ™ (Novozymes A/S).

The method of the invention may be carried out in the presence of phospholipase classified as EC 3.1.1.4 and/or EC 3.1.1.32. As used herein, the term phospholipase is an enzyme which has activity towards phospholipids.

Phospholipids, such as lecithin or phosphatidylcholine, consist of glycerol esterified with two fatty acids in an outer (sn-1) and the middle (sn-2) positions and esterified with phosphoric acid in the third position; the phosphoric acid, in turn, may be esterified to an amino-alcohol. Phospholipases are enzymes which participate in the hydrolysis of phospholipids. Several types of phospholipase activity can be distinguished, including phospholipases $A_1$ and $A_2$ which hydrolyze one fatty acyl group (in the sn-1 and sn-2 position, respectively) to form lysophospholipid; and lysophospholipase (or phospholipase B) which can hydrolyze the remaining fatty acyl group in lysophospholipid. Phospholipase C and phospholipase D (phosphodiesterases) release diacyl glycerol or phosphatidic acid respectively.

The enzyme and the photobleach may show some interaction and should be chosen such that this interaction is not negative. Some negative interactions may be avoided by encapsulation of one or other of enzyme or photobleach and/or other segregation within the product.

Suitable proteases include those of animal, vegetable or microbial origin. Microbial origin is preferred. Chemically modified or protein engineered mutants are included. The protease may be a serine protease or a metallo protease, preferably an alkaline microbial protease or a trypsin-like protease. Preferred commercially available protease enzymes include Alcalase™, Savinase™, Primase™, Duralase™, Dyrazym™, Esperase™, Everlase™, Polarzyme™, and Kannase™, (Novozymes A/S), Maxatase™, Maxacal™, Maxapem™, Properase™, Purafect™, Purafect OxP™, FN2™, and FN3™ (Genencor International Inc.).

The method of the invention may be carried out in the presence of cutinase classified in EC 3.1.1.74. The cutinase used according to the invention may be of any origin. Preferably cutinases are of microbial origin, in particular of bacterial, of fungal or of yeast origin.

Suitable amylases (alpha and/or beta) include those of bacterial or fungal origin. Chemically modified or protein engineered mutants are included. Amylases include, for example, alpha-amylases obtained from *Bacillus,* e.g. a special strain of *B. licheniformis,* described in more detail in GB 1,296,839, or the *Bacillus* sp. strains disclosed in WO 95/026397 or WO 00/060060. Commercially available amylases are Duramyl™, Termamyl™, Termamyl Ultra™, Natalase™, Stainzyme™, Fungamyl™ and BAN™ (Novozymes A/S), Rapidase™ and Purastar™ (from Genencor International Inc.).

Suitable cellulases include those of bacterial or fungal origin. Chemically modified or protein engineered mutants are included. Suitable cellulases include cellulases from the genera *Bacillus, Pseudomonas, Humicola, Fusarium, Thielavia, Acremonium,* e.g. the fungal cellulases produced from *Humicola insolens, Thielavia terrestris, Myceliophthora thermophila,* and *Fusarium oxysporum* disclosed in US 4,435,307, US 5,648,263, US 5,691,178, US 5,776,757, WO 89/09259, WO 96/029397, and WO 98/012307. Commercially available cellulases include Celluzyme™, Carezyme™, Celluclean ™, Endolase™, Renozyme™ (Novozymes A/S), Clazinase™ and Puradax HA™ (Genencor International Inc.), and KAC-500(B)™ (Kao Corporation).

Suitable peroxidases/oxidases include those of plant, bacterial or fungal origin. Chemically modified or protein engineered mutants are included. Examples of useful peroxidases include peroxidases from *Coprinus,* e.g. from *C. cinereus,* and variants thereof as those described in WO 93/24618, WO 95/10602, and WO 98/15257. Commercially available peroxidases include Guardzyme™ and Novozym™ 51004 (Novozymes A/S).

Further enzymes suitable for use are discussed in WO2009/087524, WO2009/090576, WO2009/107091, WO2009/111258 and WO2009/148983.

## Enzyme Stabilizers

Any enzyme present in the composition may be stabilized using conventional stabilizing agents, e.g., a polyol such as propylene glycol or glycerol, a sugar or sugar alcohol, lactic acid, boric acid, or a boric acid derivative, e.g., an aromatic borate ester, or a phenyl boronic acid derivative such as 4-formylphenyl boronic acid, and the composition may be formulated as described in e.g. WO 92/19709 and WO 92/19708.

Where alkyl groups are sufficiently long to form branched or cyclic chains, the alkyl groups encompass branched, cyclic and linear alkyl chains. The alkyl groups are preferably linear or branched, most preferably linear.

The indefinite article "a" or "an" and its corresponding definite article "the" as used herein means at least one, or one or more, unless specified otherwise.

**Experimental**

Acid Red 51 and Resorufin (Na salt) was obtained from Aldrich and used as supplied.

*(i) Synthesis*

**Chlororesorufin via Chlorination of Resorufin**

| Materials | Mol wt | Wt used | m Moles | Source |
|---|---|---|---|---|
| Resorufin (Na salt) | 235 | 19 | 4.26 | Aldrich |
| Manganese (IV) oxide | 86 | 5g | 58 | Aldrich |
| Water | | 70mL | | |
| Satd aq $Na_2CO_3$ | | 21mL | | |

Chlorine gas, generated from hydrochloric acid (12N) and manganese dioxide, was bubbled through a stirred, freshly prepared, solution of resorufin in water and saturated sodium carbonate. After cessation of chlorine evolution the mixture was stirred for 18 hr at 20°C. Tlc indicated that all of the resorufin had been consumed. The resulting solid was collected, washed with aqueous hydrochloric acid (1N, 25ml) and dried. Yield 0.87g Mass spec showed Chlororesorufin product is predominately the dichloro dye, with minor contributions from the mono, tri and tetra chloro dyes.

**Bromoresorufin via Bromination of Resorufin**

| Materials | Mol wt | Wt used | m Moles | Source |
|---|---|---|---|---|
| Resorufin (Na salt) | 235 | 1g | 4.26 | Aldrich |
| Bromine | 160 | 3.06g | 19.0 | |
| Water | | 70mL | | |
| Satd aq $Na_2CO_3$ | | 21mL | | |

Bromine was added at room temperature, dropwise over 5 min, to a stirred solution of Resorufin in water and saturated sodium carbonate. A mild exotherm was observed (20 → 25°C). The mixture was stirred for a further 18 hr at ambient temperature after which time all of the resorufin had been consumed, as judged by tic. Hydrochloric acid (12N) was added carefully to PH 7 and the resulting solid was collected and dried. Yield 1.37g.

Mass spec showed Bromoresorufin product is a predominately the tetra bromo dye with minor contribution from the mono, di and tri bromo dye.

**Iodoresorufin via Iodination of resorufin**

| Materials | Mol wt | Wt used | m Moles | Source |
|---|---|---|---|---|
| Resorufin (Na salt) | 235 | 1g | 4.26 | Aldrich |
| Iodine | 254 | 4.84g | 19.07 | |

The sodium salt of resorufin was dissolved in a mixture of water (70mL) and saturated aqueous sodium carbonate (21mL) at RT. Iodine was added slowly to stirred solution at ambient temp (25°C) over 10 minutes. No exo/endotherm was observed. A solid began to precipitate after ca 45 min, the mixture was stirred at ambient temperature overnight (18hr), acidified to pH 2 with with hydrochloric acid (12N) and the solid was collected, pulled dry on filter then slurried

with diethyl ether, collected, washed with ether and dried. Yield 2.5g. The method is described in DE 3411574.

Mass spec showed Iodoresorufin product is a mixture of the mono and di-iodo dye.

*(ii) Laundry Deposition and Hue*

A 10 cm by 10 cm piece of white cloth was agitated in an aqueous solution (24°French Hard, liquor: cloth 30:1) 6g/L of a base detergent (10.3wt% linear alkyl benzene sulfonate, 15.6wt% sodium carbonate, 27.9wt% sodium sulphate, 1.2wt% dolomite, 6.5wt% calcite, remainder minors and moisture) for 30 minutes at room temperature. The cloths were removed rinsed and tumble dried. The colour of the cloth was measured using a reflectometer and expressed as the CIE L*a*b* values. The experiment was repeated with the addition of 0.5ppm of dye to the wash liquor.

The total colour added to the cloth was calculated as the ΔE value, such that

$$\Delta E = (\Delta L^2 + \Delta a^2 + \Delta b^2)^{0.5}$$

where ΔL = L(control)-L(dye); Δa = a(control)-a(dye); Δb = b(control)-b(dye)

The actual colour of the cloth was calculated as the hue angle, which for the current range of colours is given by

$$\text{Hue angle} = 270 + 180/\pi \times \text{atan}(-\Delta a/\Delta b)$$

A hue angle of 360/0 is red, 270 is blue and 180 is green.

The results are summarised for bleached non-mercerised woven cotton sheeting. The error limits (± values) are the 95% confidence limits based on 3 independent repeats of the experiment.

Acid red 51 (food red 14) is included as a comparison xanthene dye.

| Dye | ΔE | Hue angle |
|---|---|---|
| Acid Red 51 (comparison) | 7.3 ± 0.5 | 335 ± 3.2 |
| Resorufin | 7.7 ± 0.6 | 326 ± 1.0 |
| Iodo-resorufin | 10.9 ± 0.8 | 252 ± 0.9 |
| Bromo-resorufin | 3.2 ± 1.9 | 257 ± 3.5 |
| Chloro-resorufin | 11.3 ± 0.2 | 284 ± 0.5 |

All the dyes deposit to the cotton cloth as shown by the ΔE values. The phenoxazine dyes are less red/more blue than Acid Red 51 as shown by the lower hue angles. The halogenated phenoxazine dyes have the most appropriate hue for shading.

*(iii) Laundry Photobleaching*

Red wine stained woven cotton obtained from the 'Centre for Test materials BV, Stoomloggerweg, 11, 3133 KT, Vlaardingen, NL' with the Fabric Number E114. The stain was washed in an analogous manner to the deposition experiment (6g/L powder) but with 5ppm of dye (0.083wt% dye on formulation) and after rinsing, whilst still wet, placed in a weatherometer for 2 hours (set at 0.35W/$m^2$ @340nm) to simulate line drying in natural sunlight. The degree of photobleaching was measured using the reflectance at 740nm, $R_{740}$, a region in where the stain absorbed light but not the dye. The photobleaching was then expressed as the $\Delta R_{740}$ value such that

$$\Delta R_{740} = R_{740}(\text{photobleach}) - R_{740}(\text{control})$$

The experiment was repeated 3 times and the error limits (± values) are the 95% confidence limits based on these 3 independent repeats of the experiment.

The results are shown below:

| Dye | $\Delta R_{740}$ |
|---|---|
| Acid Red 51 (comparison) | 4.3 ± 0.3 |
| Resorufin | 1.3 ± 0.1 |
| Iodo-resorufin | 3.2 ± 0.3 |
| Bromo-resorufin | 3.1 ± 0.3 |
| Chloro-resorufin | 3.5 ± 0.2 |

All the compounds provide photo-bleaching of the stain.

## Claims

1. A laundry treatment composition comprising:
from 2 to 70 wt% of a surfactant and from 0.0001 to 0.1 wt% of a blue or violet phenoxazine dye of the following formula and N-oxide thereof:

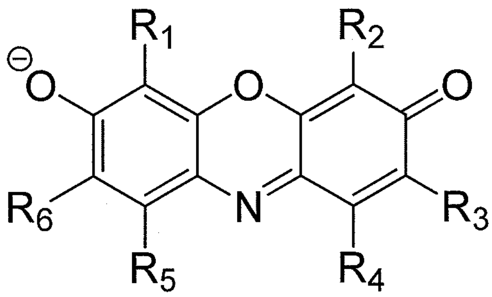

,

wherein $R_1$ to $R_6$ are independently selected from uncharged substituents, each respective uncharged substituents $R_1$ to $R_6$ having a molecular weight in the range 1 to 150.

2. A laundry treatment composition according to claim 1, wherein the $R_1$ to $R_6$ are independently selected from: hydrogen; methyl; ethyl; methoxy; ethoxy; fluorine; chlorine; bromine; and, iodine.

3. A laundry treatment composition according to claim 1 or 2, wherein one of the $R_1$ to $R_6$ is independently selected from: fluorine; chlorine; bromine; iodine and the remainder of $R_1$ to $R_6$ are hydrogen.

4. A laundry treatment composition according to claim 1 or 2, wherein two of the $R_1$ to $R_6$ are independently selected from: fluorine; chlorine; bromine; iodine and the remainder are hydrogen.

5. A laundry treatment composition according to any one of claims 2 to 4, wherein the halogen is selected from: chlorine; and, iodine.

6. A laundry treatment composition according to claim 5, wherein the halogen is chlorine.

7. A laundry treatment composition according to any one of the preceding claims, wherein the formulation is granular.

8. A domestic method of treating a textile, the method comprising the step of: treating a textile with an aqueous solution of 0.5 to 20 g/L of the laundry detergent composition according to any preceding claim.

## Patentansprüche

1. Wäschebehandlungszusammensetzung, umfassend:
von 2 bis 70 Gew.-% eines Tensids und von 0,0001 bis 0,1 Gew.-% eines blauen oder violetten Phenoxazin-Farbstoffs der folgenden Formel und eines N-Oxids davon:

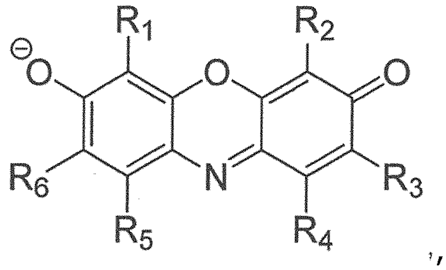

worin $R_1$ bis $R_6$ unabhängig voneinander aus ungeladenen Substituenten ausgewählt sind, wobei die jeweiligen ungeladenen Substituenten $R_1$ bis $R_6$ ein Molekulargewicht in dem Bereich von 1 bis 150 aufweisen.

2. Wäschebehandlungszusammensetzung nach Anspruch 1, wobei $R_1$ bis $R_6$ unabhängig voneinander aus Wasserstoff, Methyl, Ethyl, Methoxy, Ethoxy, Fluor, Chlor, Brom und Jod ausgewählt sind.

3. Wäschebehandlungszusammensetzung nach Anspruch 1 oder 2, wobei eines von $R_1$ bis $R_6$ unabhängig voneinander aus Fluor, Chlor, Brom und Jod ausgewählt ist und der Rest $R_1$ bis $R_6$ Wasserstoff ist.

4. Wäschebehandlungszusammensetzung nach Anspruch 1 oder 2, wobei zwei von $R_1$ bis $R_6$ unabhängig voneinander aus Fluor, Chlor, Brom und Jod ausgewählt sind und der Rest Wasserstoff ist.

5. Wäschebehandlungszusammensetzung nach irgendeinem der Ansprüche 2 bis 4, wobei das Halogen aus Chlor und Jod ausgewählt ist.

6. Wäschebehandlungszusammensetzung nach Anspruch 5, wobei das Halogen Chlor ist.

7. Wäschebehandlungszusammensetzung nach irgendeinem der vorhergehenden Ansprüche, wobei die Formulierung granular ist.

8. Häusliches Verfahren zur Behandlung eines Textils, wobei das Verfahren den Schritt umfasst: Behandlung eines Textils in einer wässrigen Lösung von 0,5 bis 20 g/l der Wäschebehandlungszusammensetzung nach irgendeinem vorhergehenden Anspruch.

## Revendications

1. Composition de traitement de linge comprenant :
de 2 à 70 % en masse d'un tensioactif et de 0,0001 à 0,1 % en masse d'un colorant de phénoxazine bleu ou violet de la formule suivante et un N-oxyde de celui-ci :

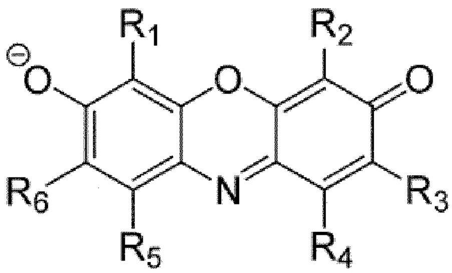

dans laquelle $R_1$ à $R_6$ sont indépendamment choisis parmi des substituants non-chargés, chacun des substituants $R_1$ à $R_6$ non-chargés respectifs ayant une masse moléculaire dans l'intervalle de 1 à 150.

2. Composition de traitement de linge selon la revendication 1, dans laquelle les $R_1$ à $R_6$ sont indépendamment choisis parmi : l'hydrogène ; le groupe méthyle ; éthyle ; méthoxy ; éthoxy ; fluor ; chlore ; brome ; et, iode.

3. Composition de traitement de linge selon la revendication 1 ou 2, dans laquelle un des $R_1$ à $R_6$ est indépendamment

choisi parmi : le fluor ; chlore ; brome ; iode et les restants de $R_1$ à $R_6$ sont l'hydrogène.

4. Composition de traitement de linge selon la revendication 1 ou 2, dans laquelle deux des $R_1$ à $R_6$ sont indépendamment choisis parmi : le fluor ; chlore ; brome ; iode et les restants sont l'hydrogène.

5. Composition de traitement de linge selon l'une quelconque des revendications 2 à 4, dans laquelle l'halogène est choisi parmi : le chlore ; et, l'iode.

6. Composition de traitement de linge selon la revendication 5, dans laquelle l'halogène est le chlore.

7. Composition de traitement de linge selon l'une quelconque des revendications précédentes, dans laquelle la formulation est granulaire.

8. Procédé domestique de traitement d'un textile, le procédé comprenant l'étape de : traitement d'un textile avec une solution aqueuse de 0,5 à 20 g/L de la composition de détergent de linge selon l'une quelconque des revendications précédentes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012172038 A
- WO 2005003277 A
- WO 2005014769 A
- WO 2005042504 A
- US 2006230547 A
- CA 1257253
- EP 328177 A
- EP 070074 A
- EP 346995 A
- EP 0239910 A
- EP 0384070 A
- EP 258068 A
- EP 305216 A
- WO 9613580 A
- EP 218272 A
- EP 331376 A
- GB 1372034 A
- WO 9506720 A
- WO 9627002 A
- WO 9612012 A
- JP 64744992 B
- WO 9116422 A
- WO 9205249 A
- WO 9401541 A
- EP 407225 A
- EP 260105 A
- WO 9535381 A
- WO 9600292 A
- WO 9530744 A
- WO 9425578 A
- WO 9514783 A
- WO 9522615 A
- WO 9704079 A
- WO 9707202 A
- WO 0060063 A
- GB 1296839 A
- WO 95026397 A
- WO 00060060 A
- US 4435307 A
- US 5648263 A
- US 5691178 A
- US 5776757 A
- WO 8909259 A
- WO 96029397 A
- WO 98012307 A
- WO 9324618 A
- WO 9510602 A
- WO 9815257 A
- WO 2009087524 A
- WO 2009090576 A
- WO 2009107091 A
- WO 2009111258 A
- WO 2009148983 A
- WO 9219709 A
- WO 9219708 A
- DE 3411574


### Non-patent literature cited in the description


- **A LOAS et al.** *Inorganic Chemistry,* vol. 53, 6491-6493
- **SCHWARTZ ; PERRY.** Surface Active Agents. Interscience, 1949, vol. 1
- **SCHWARTZ ; PERRY ; BERCH.** SURFACE ACTIVE AGENTS. Interscience, 1958, vol. 2
- McCutcheon's Emulsifiers and Detergents. Manufacturing Confectioners Company
- **H. STACHE.** Tenside-Taschenbuch. Carl Hauser Verlag, 1981
- International Buyers Guide. CFTA Publications, 1992
- Chemicals Buyers Directory 80th Annual Edition. OPD. Schnell Publishing Co, 1993
- **POUCHER.** *Journal of the Society of Cosmetic Chemists,* 1955, vol. 6 (2), 80
- **DARTOIS et al.** *Biochemica et Biophysica Acta,* 1993, vol. 1131, 253-360